# FASCICULE DE BREVET EUROPEEN

(11) **EP 1 628 067 B1**
(45) Date de publication et mention de la délivrance du brevet: **08.10.2008**
(21) Numéro de dépôt: 05291430.6
(22) Date de dépôt: 01.07.2005
(51) Int. Cl.: F16L 47/03, B29C 65/34, H05B 3/58

(54) **Procédé de réparation in situ d'un conduit ou d'un réservoir en matière thermofusible et dispositif pour la mise en oeuvre de ce procédé**
In situ Reparaturverfahren einer Rohrleitung oder eines Behälters aus wärmeschmelzendem Material sowie Vorrichtung zur Durchführung des genannten Verfahrens
In situ repair method for a conduit or a reservoir of thermofusible material and device for carrying out said method

(30) Priorité: 20.08.2004 FR 0409024
(43) Date de publication de la demande: 22.02.2006
(73) Titulaire: GAZ DE FRANCE (SERVICE NATIONAL), F-75017 Paris (FR)
(72) Inventeur: Gueugnaut, Dominique, 75005 Paris (FR); Corral-Hernandez, Irene, 75003 Paris (FR); Le Coguic, Jean, 95360 Montagny (FR); Darut, Alain, 78400 Chatou (FR)
(74) Mandataire: Berger, Helmut

(56) Documents cités:
- EP-A- 0 924 053
- EP-A- 1 262 272
- WO-A-93/10962
- DE-A1- 4 209 522
- GB-A- 2 302 490
- US-A- 5 369 248
- US-A- 5 410 131
- US-B1- 6 278 096
- US-B1- 6 313 449
- PATENT ABSTRACTS OF JAPAN vol. 2000, no. 02, 29 février 2000 (2000-02-29) -& JP 11 304080 A (KUBOTA CORP), 5 novembre 1999 (1999-11-05)
- PATENT ABSTRACTS OF JAPAN vol. 2000, no. 05, 14 septembre 2000 (2000-09-14) -& JP 2000 035184 A (KUBOTA CORP), 2 février 2000 (2000-02-02)
- PATENT ABSTRACTS OF JAPAN vol. 016, no. 576 (M-1345), 16 décembre 1992 (1992-12-16) -& JP 04 224396 A (OSAKA GAS CO LTD), 13 août 1992 (1992-08-13)

## Description

L'invention concerne un procédé de réparation in situ d'un conduit de transport ou de distribution en matière thermofusible à l'intérieur duquel circule un fluide tel que de l'eau ou un gaz, ainsi qu'un dispositif pour réparer in situ un conduit en matière thermofusible.

L'invention concerne également un procédé de réparation in situ d'un réservoir en matière thermofusible à l'intérieur duquel est stocké un fluide tel que de l'eau ou un gaz, ainsi qu'un dispositif pour réparer in situ un tel réservoir.

L'invention concerne donc le domaine de l'intervention sur un tronçon endommagé d'une canalisation ou d'un conduit en matière thermofusible ou sur un réservoir en matière thermofusible , dans lequel conduit ou réservoir circule, ou est stocké, un fluide. Ce dernier peut être inflammable et/ou explosif. Il peut également être sous pression. Ce peut être par exemple du gaz naturel.

Les réseaux de distribution, notamment en ce qui concerne la distribution de gaz de ville ou de gaz naturel, sont constitués en grande majorité de conduits formés à partir de tubes ou tuyaux en polyéthylène ou en polyamide, polybutylène,polypropylène ou polychlorure de vinyle. Pour assembler de tels tuyaux, plusieurs techniques existent. Une par exemple consiste à chauffer les embouts de deux tuyaux disposés en regard jusqu'à ce que la matière thermofusible soit suffisamment fluide pour que les deux embouts, rapprochés l'un à l'autre sous une légère pression, se fondent l'un dans l'autre et forment une jonction sensiblement étanche au gaz et avec une résistance mécanique compatible avec l'utilisation des conduits à former.

Cette technique d'assemblage peut également être appliquée, de manière analogue, pour former un réservoir à partir des éléments en une matière thermofusible.

Les conduits et réservoirs en matière thermofusible démontrent une bonne tenue dans le temps de ce matériau, utilisé, au moins en ce qui concerne les conduits, dans les réseaux de distribution de gaz depuis le milieu des années 70 en France. Cependant, du fait de l'occurrence possible d'endommagements accidentels de ces canalisations et réservoirs, il est nécessaire de disposer de procédés de réparation in situ qui permettent d'éviter autant que faire se peut le remplacement intégral systématique d'un tronçon endommagé d'une canalisation ou le remplacement intégral d'un réservoir, et impactant fortement l'exploitation du réseau.

Pour simplifier la lecture du texte ci-après et pour rendre ainsi sa compréhension plus facile, la présente invention sera décrite ci-après uniquement en référence à des conduits en matière thermofusible.

Les conduits en matière thermofusible peuvent être endommagés de différentes façons. Une d'elles est celle qui résulte d'un percement d'un tronçon ne le rendant plus étanche. Dans une telle situation, le remplacement intégral du tronçon est quasiment inévitable.

Une autre est celle qui entraîne un dommage intérieur ou extérieur du conduit, mais qui laisse le conduit néanmoins étanche sur le court terme (existence de rayures ou d'entailles extérieures, création de micro fissures intérieures par une opération d'intervention par écrasement sur le tube).

Actuellement, pour tenter de réparer de tels conduits, dans le cadre d'une intervention par écrasement on peut être amené à mettre en place une selle de renfort électrosoudable, qui a pour fonction uniquement de renforcer localement la zone endommagée et dont le soudage peut être rendu délicat en raison de l'ovalisation du conduit.

Pour des raisons économiques et techniques, la mise en place d'une selle de renfort n'est pas utilisée pour la réparation des endommagements extérieurs (exemple : entaille).

Concernant ces derniers, le seuil de nocivité généralement admis est voisin de 10% de l'épaisseur de la paroi en ce qui concerne les conduits sous pression, par exemple.

Cependant, la méconnaissance actuelle de l'influence de la précision de cette valeur sur la réduction de durée de vie effective des conduits endommagés ne permet pas de gérer sereinement tous les cas limites, c'est-à-dire les cas pour lesquels la profondeur de défaut est très voisin de la valeur indiquée.

Le but de l'invention est de proposer un procédé de réparation in situ d'un conduit ou d'un réservoir en matière thermofusible, qui soit simple à mettre en oeuvre, n'engendrant pas de frais particuliers et qui permette d'obtenir une réparation fiable et durable d'un tronçon de conduit ou d'un réservoir endommagé susceptible d'éviter un remplacement intégral systématique du tronçon ou du réservoir endommagé.

Avantageusement, le procédé de l'invention doit permettre d'effectuer la réparation du conduit ou du réservoir sans le vidanger nécessairement au préalable.

D'autres techniques de réparation ont déjà été développées, notamment pour la réparation de canalisations en polyéthylène.

Ainsi, selon une première technique, on fait fondre par friction une pièce en polyéthylène modifié en lui imprimant un mouvement de translation alternée à fréquence élevée au moyen d'un générateur extérieur adéquate. La pièce en polyéthylène est alors appliquée, en son état de fusion, sur le tronçon endommagé. Cette technique a cependant deux inconvénients. Le premier est celui de devoir tenir à disposition différents types de pièce de conduit afin de disposer toujours d'un élément adaptable à la configuration du conduit à réparer. Le second concerne les éléments de réparation qui devraient être en un matériau standard afin d'être adaptable à toute sorte de polyéthylène selon le matériau spécifique du conduit à réparer. En même temps, cette première technique est difficilement applicable à des conduits de petit diamètre.

Selon une deuxième technique, la fusion d'un élément en polyéthylène modifié est obtenue par friction, non pas en translation, mais en rotation rapide. Outre le fait que cette deuxième technique s'applique de préférence aux cas de défauts traversants, c'est-à-dire intéressant l'épaisseur complète du tube, cette deuxième technique nécessite, comme la première, l'utilisation d'un matériau de rechargement. De plus, l'une comme l'autre de ces deux techniques nécessite au préalable la mise en place d'un moyen faisant office de joint pour éviter un écoulement du polyéthylène au moment de la fusion de la pièce que l'on fait fondre sous l'effet de la friction.

En outre, la première comme la deuxième technique paraissent plutôt adaptées à la réparation de défauts traversant, défauts peu représentatifs et qui, de plus, sont généralement traités en remplaçant le tronçon endommagé. Ceci limite ces deux techniques à des applications hors charge préjudiciable ainsi à l'exploitation normale du réseau.

Selon une troisième technique, on place un moule sur le tronçon de conduit à réparer et on y injecte du polyéthylène fondu. Cette technique s'apparente de par son principe à un procédé d'injection, nécessitant de disposer de plusieurs moules adaptés à l'ensemble des diamètres de conduits pouvant être réparés et faisant intervenir des appareils volumineux et lourds, notamment pour l'injection du polyéthylène fondu. Cette troisième technique, comme les deux précédentes, paraît complètement inadaptée à la réparation de conduits endommagés de petit diamètre.

Selon une quatrième technique, on soude sur le conduit à l'endroit du défaut, une selle de renfort constituée d'un polyéthylène modifié à fluidité améliorée, chauffé au préalable au moyen d'un outil. Cette technique est dérivée de la technique classique du soudage et nécessite la fabrication d'une gamme complète de selles de renfort à partir d'un polyéthylène modifié, pour l'ensemble des diamètres existant dans un réseau de distribution.

Chacune de ces quatre techniques est décrite de façon plus détaillée dans des documents publiés en novembre 1998 par Gas Research Institute, Chicago, Illinois, Etats-Unis d'Amérique, notamment référencés GRI-98/0340, GRI-98/0339, GRI-98/0342 et GRI-98/0341.

En ce qui concerne des outils ou moyens de chauffage utilisés pour faire fondre des pièces en matière thermofusible, certains documents, par exemple les documents FR-A-92 04 415 et FR-A-92 10 450, décrivent un filet formant une résistance de chauffage sous la forme d'un treillis noyé dans l'épaisseur d'une pièce de raccordement en matière thermofusible. Ce filet permet le thermosoudage de tubes en matière plastique entre eux, notamment des canalisations et des prises de branchement. Il ne suggère pas son utilisation en vue d'une quelconque réparation. Une technique entièrement différente est décrite dans le document WO-A-93/10962. Selon cette technique, la matière thermofusible est chauffée par micro-ondes, ce qui implique à nouveau un outillage assez conséquent et onéreux.

Le document JP 11 304 080 enseigne un procédé de réparation d'un conduit en matière plastique par fixation et soudage par une couverture chauffante, d'une plaque en matière thermoplastique destinée à recouvrir l'endommagement.

Pour pallier les inconvénients des différentes techniques évoquées ci-avant et plus particulièrement pour permettre la réparation in situ d'un réservoir ou d'un conduit à l'intérieur duquel est stocké ou circule un fluide, comme par exemple un gaz inflammable, la présente invention propose un procédé selon la revendication 1.

Le procédé de l'invention repose ainsi sur un chauffage modéré et local de la zone endommagée d'un conduit en matière thermofusible, notamment en polyéthylène, au moyen d'un élément chauffant électrique tel qu'un filet métallique en un alliage métallique, par exemple en cuivre, formant une résistance de chauffe, couvrant la totalité de la zone endommagée, et ceci sans aucun apport de matière de rechargement. L'alimentation des conducteurs de l'élément chauffant avec une énergie électrique appropriée est assurée avantageusement, mais non exclusivement, par des automates, par exemple, par des automates de soudage tels que ceux utilisés pour réaliser des soudages par électrofusion, soit de manière manuelle, soit de manière automatique.

La caractéristique technique du conduit ou réservoir à réparer, selon laquelle l'application de l'énergie électrique est réglée, est principalement l'épaisseur de paroi du conduit ou du réservoir.

Le profil de durée d'application de l'énergie thermique comprend au moins une phase de chauffage de la zone endommagée et au moins une phase de refroidissement de la zone endommagée.

Pendant le chauffage, l'énergie électrique est appliquée aux conducteurs électriques soit avec une tension de consigne, soit avec une intensité de courant de consigne.

Il demeure possible de gérer cette énergie par l'intermédiaire d'une température de consigne imposée à l'élément chauffant.

Le profil de durée d'application de l'énergie électrique, repose sur la gestion à minima de trois paramètres, par exemple la tension délivrée par l'automate, le temps pendant lequel on applique cette tension et la température de l'élément chauffant.

Les paramètres de sélection du cycle de chauffage-refroidissement peuvent être adaptés pour la réparation des endommagements présents soit en surface extérieure du conduit (entailles, rayures), soit situés dans l'épaisseur même du conduit ou réservoir (vides, inclusions), soit encore en surface intérieure du conduit ou du réservoir (zones écrasées-redressées, défauts d'extrusion) ; dans tous les cas, ces défauts ne sont pas traversants.

Dans le cas d'un conduit ou d'un réservoir endommagé par un défaut ne débouchant pas à la surface interne, type entaille, le procédé de l'invention permet d'atteindre localement à minima la température de fusion de la matière thermofusible, dans la zone endommagée à réparer, sur une profondeur pouvant aller jusqu'à 50 % de l'épaisseur. En effet, la fusion permettant la réparation du défaut n'affecte pas la surface intérieure du tube qui peut ainsi tenir la pression lorsque le fluide est sous pression, et qui ainsi n'affecte pas la continuité d'exploitation du réseau.

Dans le cas d'un conduit ou d'un réservoir endommagé intérieurement, le procédé de l'invention permet d'atteindre localement une température de recuit inférieure au, par exemple voisine du, point de ramollissement de la matière thermofusible en laquelle le conduit ou le réservoir sont réalisés, permettant la régénération partielle ou totale de la microstructure originale du matériau.

Dans tous les cas, la température de la matière constituant la surface intérieure du conduit ou réservoir est toujours inférieure au point de ramollissement de celle-ci.

Le procédé de l'invention permet donc de régler la température de l'élément chauffant, et par cela la température de la matière thermofusible dans la zone à réparer, de manière à ce que le conduit ou réservoir ne soit pas entièrement ramolli et qu'il puisse notamment continuer à assurer sa fonction.

Selon diverses caractéristiques supplémentaires du procédé de l'invention, la gestion du flux de chaleur généré par le cycle de chauffage-refroidissement peut être optimisée. Par exemple par l'ajout d'une couche isolante rapportée sur l'élément chauffant

Selon une autre caractéristique supplémentaire, la phase de refroidissement comprend un refroidissement contrôlé de la zone ou de l'endommagement à réparer. Que le cycle de chauffage-refroidissement comprenne un refroidissement naturel ou un refroidissement contrôlé, selon la température maximale atteinte et donc selon la nature du défaut à réparer, l'élément chauffant peut ou non rester en place autour de la zone réparée.

Par ailleurs, pour éviter que l'élément chauffant ne s'incruste dans la matière thermofusible, l'élément chauffant est avantageusement recouvert d'un dispositif conducteur de chaleur. Ce dispositif est, par exemple, une feuille d'aluminium rapportée sur l'élément chauffant.

Afin d'obtenir une automatisation maximale du procédé de l'invention, le profil de durée d'application de l'énergie électrique est avantageusement géré par exemple par un automate de soudage qui comporte un moyen d'introduction d'au moins un critère de régulation de l'énergie électrique à appliquer. Ce moyen d'introduction peut être, par exemple, un lecteur de code à barres.

L'automatisation peut être gérée, par exemple, à partir de données techniques contenues dans un support approprié, tel un code à barres ou une puce électronique.

Dans de nombreux cas, le profil de durée d'application de l'énergie électrique est géré selon un système de gestion à minima d'au moins trois paramètres, à savoir la tension avec laquelle l'énergie électrique est appliquée, la durée d'application de cette énergie et la température de l'élément chauffant. Toutefois, ce système de gestion peut être complété de manière qu'il inclut, en plus, la température et/ou la vitesse de refroidissement.

Le but de l'invention est également atteint avec un dispositif pour réparer in situ un conduit ou un réservoir en matière thermofusible selon la revendication 15.

Avantageusement, le dispositif de l'invention comprend un moyen permettant d'appliquer l'énergie électrique aux conducteurs électriques soit avec une tension de consigne, soit avec une intensité de courant de consigne, soit encore selon des courbes de courant spécifiquement étudiées.

Selon une caractéristique supplémentaire, le dispositif de l'invention comprend un moyen permettant de régler le refroidissement de la zone à réparer.

Le procédé de l'invention, tout comme le dispositif de l'invention, donne la possibilité de réparer des conduits ou réservoirs en matière thermofusible aussi bien lorsque ces derniers sont endommagés soit extérieurement, soit dans l'épaisseur, soit intérieurement et notamment lorsqu'ils sont en charge et lorsque le fluide véhiculé est un gaz inflammable sous pression.

D'autres caractéristiques et avantages de la présente invention ressortiront de la description ci-après d'un mode de mise en oeuvre du procédé de l'invention et du dispositif intervenant dans cette mise en oeuvre.

La description du mode de mise en oeuvre et du dispositif sera complétée par des diagrammes figurant dans les dessins. Dans ces dessins :
Les figures 1 et 2 représentent, sous la forme de diagrammes, l'évolution de la température avec le temps de la zone à réparer pour laquelle le procédé est mis en oeuvre pour différentes épaisseurs (a, b, c, d, e) dans la paroi, a correspondant à une épaisseur nulle, b, c, d à des épaisseurs intermédiaires du moins profond au plus profond et e correspondant à l'épaisseur du tube. Le cycle thermique présenté sur la figure 1 ne permet pas la réparation des défauts structuraux (de type entaille par exemple) du conduit endommagé.
La figure 2 illustre la réparation d'un tube pour des défauts structuraux dont la profondeur est inférieure à b et des défauts microstructuraux (de type micro-fissures par exemple) pour les profondeurs complémentaires.
La figure 3 représente des manipulations selon le procédé de l'invention pour préparer la réparation d'un conduit intérieurement endommagé.
La figure 4 représente la zone endommagée du conduit enveloppé de la figure 3 en vue de sa réparation.
La figure 5 représente le dispositif de l'invention appliqué pour la réparation du conduit des figures 3 et 4.
La figure 6 représente des manipulations selon le procédé de l'invention pour préparer la réparation d'un conduit extérieurement endommagé.
La figure 7 représente la zone endommagée du conduit enveloppé de la figure 6 en vue de sa réparation.
La figure 8 représente le dispositif de l'invention appliqué pour la réparation du conduit des figures 6 et 7, et
La figure 9 représente un exemple de cycle de chauffage-refroidissement de l'élément chauffant et destiné à la réparation d'un endommagement du type entaille extérieure.

Lorsque l'on doit réparer un conduit 10 en matière thermofusible à l'intérieur duquel circule un fluide tel que par exemple un gaz inflammable, on met en place, selon le procédé de l'invention, un élément chauffant électrique 1 constitué, par exemple, d'un filet résultant du tricotage d'un fil en alliage de cuivre formant résistance électrique et revêtu d'un matériau faisant office de coupe-circuit, par exemple par fusion. Cet élément chauffant 1, qui est conformé de manière à pouvoir couvrir entièrement l'endommagement du tronçon du conduit 10, comporte des conducteurs électriques 2, 3 raccordés à ce filet et destinés à être reliés à un dispositif d'alimentation 20 des conducteurs électriques 2, 3 avec une énergie électrique appropriée. Avantageusement, on recouvre l'élément chauffant d'un film d'aluminium 4, ce film d'aluminium faisant office d'un système souple rapporté permettant d'éviter une incrustation de l'élément chauffant dans la zone à réparer du conduit. Les performances de l'élément chauffant 1 peuvent encore être améliorées en enveloppant l'élément chauffant 1, pourvu ou non du système souple 4 anti-incrustation, avec un moyen d'isolation thermique 6, par exemple une couche isolante en laine de roche, pour isoler thermiquement l'élément chauffant 1 par rapport à son environnement. Ce moyen d'isolation thermique 6 peut, à son tour, être régulé pour obtenir une meilleure gestion, notamment de la phase de refroidissement du tronçon réparé.

Le maintien en place de l'élément chauffant 1, enveloppé ou non respectivement d'un film d'aluminium 4 et/ou d'une couche isolante 6 en laine de roche, est assuré à l'aide de moyens de fixation 5 amovibles telles que des bandes accrochantes du type Velcro® ou Scotch®.

Ensuite, l'élément chauffant 1 est relié au dispositif d'alimentation 20 moyennant des connecteurs 8. Le dispositif d'alimentation 20, qui peut être par exemple une machine à souder, capable d'imposer à l'élément chauffant 1 un cycle de chauffage programmable, soit manuellement soit de manière automatique, comprend des moyens permettant de programmer le dispositif 20 par exemple par lecture d'un code à barres.

Le code à barres correspondant à un certain type de conduit, caractérisé par la matière thermofusible et par ses dimensions, une mémoire interne de l'automate 20 fournira les indications nécessaires au programmateur interne de l'automate 20, sous la forme de signaux électriques acheminés respectivement à un moyen de réglage du courant (tension, intensité), afin d'appliquer aux conducteurs électriques 2, 3 de l'élément chauffant 1, l'énergie électrique avec une tension ou une intensité de courant de consigne.

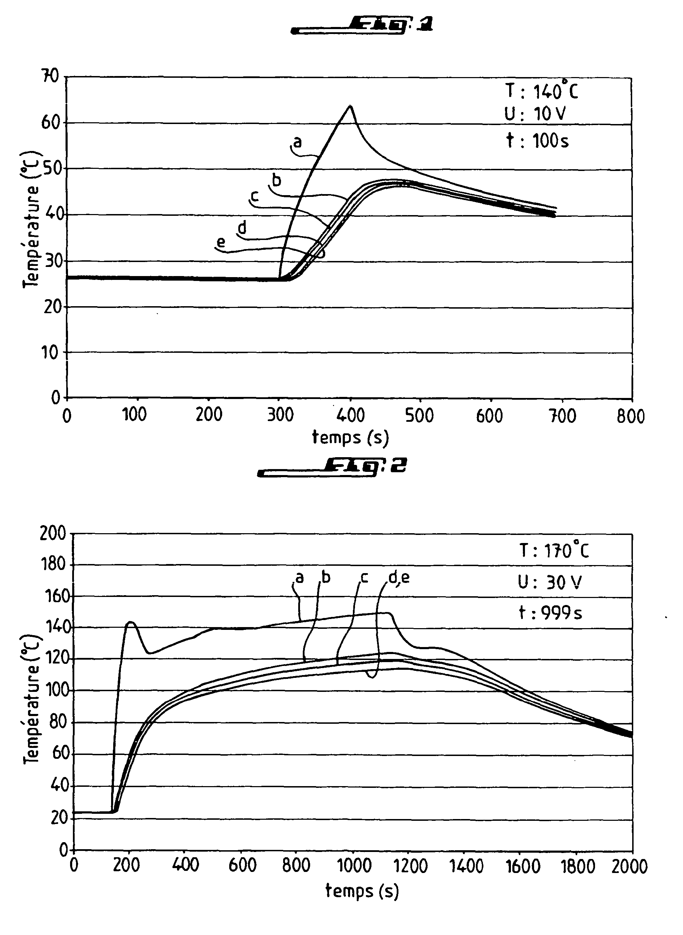

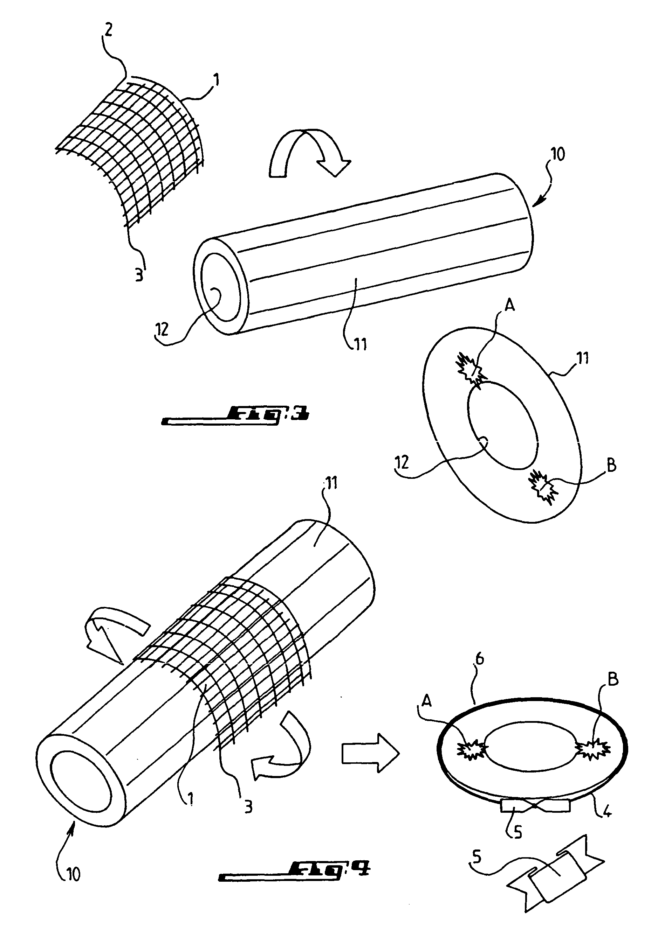

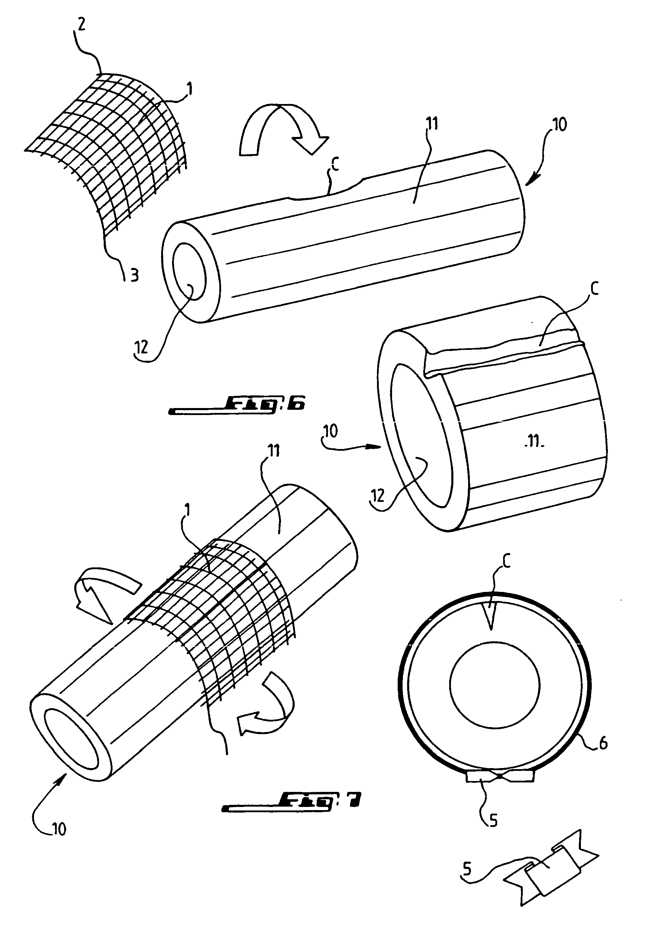

La réparation d'un tube en polyéthylène présentant des endommagements A, B et C se déroule alors comme suit (figures 3 à 5 et 6 à 8) :
- mise en place d'un élément chauffant électrique autour de la zone endommagée du conduit, l'élément chauffant ayant la forme d'un filet de fils électriques ;
- fixation du filet chauffant autour du conduit ;
- connexion du filet chauffant à un automate approprié ;
- exécution d'un cycle de chauffage-refroidissement aux conditions électriques et de mise en oeuvre adaptées dont le profil est du type des diagrammes des figures 1 ou 2.
- la nature du cycle de chauffage-refroidissement sera différente selon le type d'endommagement à réparer. Par exemple, dans le cas d'endommagements internes, du type A, B (figures 3 à 5) le cycle sera adapté de telle manière à obtenir une température de recuit proche du point de ramollissement du matériau au niveau de la zone endommagée. Dans le cas d'endommagements externes, du type C (figures 6 à 8) le cycle sera adapté de telle manière à obtenir une température proche du point de fusion du matériau au niveau de la zone endommagée.

Le procédé de réparation selon l'invention est mise en oeuvre moyennant les éléments suivants représentés sur les figures 3 à 8 :
- un élément chauffant constitué, par exemple, d'un filet 1 résultant du tricotage d'un fil en alliage de cuivre formant résistance électrique et revêtu d'un matériau faisant office de coupe-circuit, par exemple par fusion. Ce filet peut être réalisé spécifiquement pour un certain type de conduit caractérisé par son diamètre intérieur ou extérieur, l'épaisseur de la paroi du conduit étant alors fonction de ce diamètre. Toutefois, le filet peut également être réalisé sous la forme d'une nappe assez grande dont on découpe un filet de dimensions nécessaires selon le type de conduit à réparer.
- des conducteurs électriques 2, 3 solidaires du filet 1 lorsque le filet est préfabriqué dans différentes dimensions ou des conducteurs individuels devant être raccordés au filet lorsque celui-ci est découpé d'une nappe comme indiqué plus haut ; ces conducteurs sont donc destinés à relier le filet 1 à un automate 20 en tant que source d'énergie électrique réglable ;
- un système souple 4 rapporté sur l'élément chauffant 1 et permettant sa non-incrustation dans la zone à réparer ; ce système souple 4 est constitué, par exemple, d'un film d'aluminium ;
- un système d'isolation thermique 6 de l'élément chauffant 1 par rapport à l'environnement ; l'isolation thermique est constituée, par exemple, d'un élément en laine de roche ; ce système d'isolation peut être à son tour régulé pour une meilleure gestion, notamment de la phase de refroidissement du cycle de chauffage/refroidissement, moyennant un système de refroidissement adapté, par exemple un système de circulation d'un fluide ; ce réglage du refroidissement, tout comme la phase de chauffage du cycle de chauffage/refroidissement, peut être effectué avantageusement sur la base d'un mesurage de température mise en oeuvre à l'aide d'un capteur de température, par exemple un thermocouple disposé sur le filet ;
- des pièces de connexion et de fixation mécaniques et électriques, telles que, par exemple, des attaches 5 sous la forme de bandes adhésives ou de bandes de type Velcro® pour attacher l'élément en laine de roche ou le film d'aluminium ; ou encore des connecteurs 8 pour le raccordement des conducteurs 2, 3 à l'automate de soudage 20 ; les pièces de connexion peuvent également comprendre des moyens de connexion électriques amovibles, tels que des rivets, des boulons ou des clips permettant de fixer les conducteurs 2, 3 sur un élément chauffant confectionné à partir d'un filet de base dans des dimensions spécifiques selon les dimensions de la zone endommagée du conduit ; les rivets, boulons ou clips peuvent également servir à fixer sur ce filet des câbles de connexion faisant partie des accessoires d'équipement de l'automate.

La figure 3 représente schématiquement un élément chauffant 1 avec ses deux conduits de connexion 2, 3 pré-conformé de manière à pouvoir être disposé autour de la zone endommagée d'un conduit 10 ayant une surface extérieure 11 et une surface intérieure 12. Le conduit 10 est représenté sur cette figure en perspective et en une vue axiale avec indication des deux endommagements intérieurs A, B situés sur la surface intérieure 12.

La figure 4 représente ces éléments dans l'état assemblé, à savoir le conduit 10 avec un élément chauffant 1 appliqué sur sa surface extérieure 11 et enroulé entièrement autour de ce conduit puisque le conduit 10 présente deux endommagements diamétralement opposés sur la surface intérieure 12.

Il va sans dire que, sans sortir du cadre de la présente invention, l'on pourrait appliquer deux éléments chauffants 1, disposés diamétralement opposés sur la surface extérieure 11 du conduit 10 et localement limités de manière à ne chauffer que les alentours proches de chacun des endroits endommagés.

Il est préférable d'appliquer l'élément chauffant sur la zone comportant le défaut à réparer. Toutefois, sur le plan pratique, et dans la mesure où la méthode de réparation doit s'adapter à des conditions extrêmes telles que celles connues sur un chantier, le recouvrement complet de l'objet par l'élément chauffant peut s'avérer plus adapté sans pour cela altérer la qualité de la réparation.

La figure 4 représente l'élément chauffant 1, un film d'aluminium 4 empêchant l'incrustation et une couche d'isolation thermique 6 appliqués sur un conduit 10 ayant deux endommagements A, B. Le film d'aluminium 4 est fixé moyennant par exemple des attaches 5 et la couche isolante 6 est fixée par exemple par des bandes Velcro®.

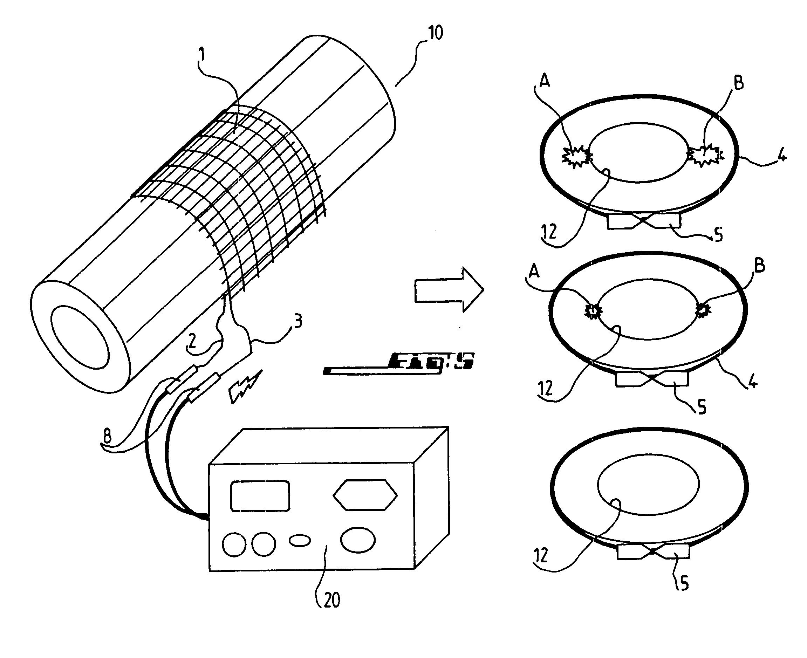

La figure 5 représente le conduit 10 équipé d'un élément chauffant 1, d'un film d'aluminium 4 et d'une couche isolante 6, d'abord en perspective avec son raccordement électrique à un automate de soudage 20 et, ensuite, en des vues axiales, à trois moments différents de la mise en oeuvre du procédé de l'invention, à savoir au début d'un cycle de chauffage-refroidissement, en cours de mise en oeuvre et à la fin du cycle. On y voit plus particulièrement que les endommagements A, B se réduisent en dimensions au fur et à mesure que la matière thermofusible est fondue et la paroi du conduit 10 est refondue de manière à donner un élément homogène sans défaut ou avec un défaut persistant mais non rédhibitoire pour la durée de vie du conduit.

La figure 6 et la figure 7 représentent une situation du conduit 10 comparable à celle représentée sur les figures 3 et 4. Ainsi, le conduit 10 avec sa surface extérieure 11 et sa surface intérieure 12 et son endommagement C sous la forme d'une entaille sur la surface extérieure 11, est entouré, dans la zone endommagé, par un élément chauffant 1 ayant des conduits électriques 2, 3 pour le raccordement électrique à un automate de soudage 20. L'élément chauffant 1 est lui-même recouvert d'une couche thermiquement isolante en laine de roche 6 fixée moyennant des attaches 5.

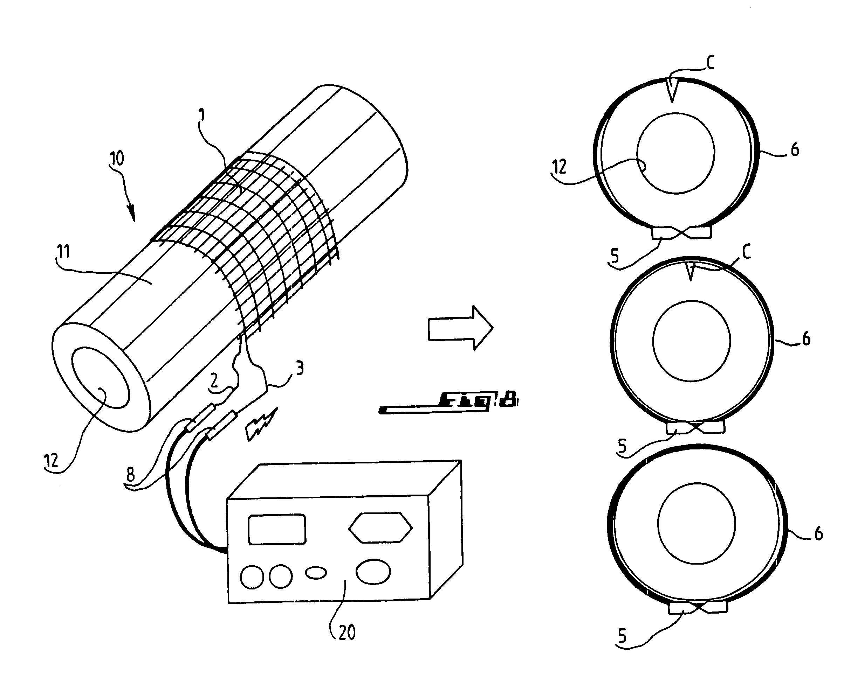

Au fur et à mesure que l'on applique l'énergie électrique et que l'on chauffe donc la zone endommagée C moyennant l'élément chauffant 1, la taille de l'endommagement C diminue jusqu'à disparaître au troisième des trois moments de mise en oeuvre représentés sur la figure 8.

Le procédé de l'invention présente un certain nombre d'avantages parmi lesquelles figurent:
- le procédé peut être mis en oeuvre par des machines ou automates de soudage classiques déjà en utilisation ;
- la mise en oeuvre du procédé de l'invention est indépendante des dimensions des conduits utilisés ; elle est donc applicable à la gamme complète des conduits dont les diamètres sont compris entre 20 et 200 mm, parfois même au-delà, et cela aussi bien pour des conduits de fluides que pour des réservoirs.
- le procédé ne nécessite aucune formation spécifique du personnel mettant en oeuvre ce procédé ;
- le procédé permet d'obtenir une réparation durable ;
- le prix de l'élément chauffant, notamment dans sa version "à découper" permet de le considérer, le cas échéant, comme un consommable ;
- la technique est bien adaptée à l'ensemble des configurations de défauts possibles, ainsi que des configurations difficiles du terrain (remontée de coffret, défaut sur génératrice autre que supérieure);
- l'insensibilité au rayon de courbure du conduit en raison de la souplesse de l'élément chauffant ;
- souplesse d'utilisation du dispositif et adaptabilité à toute surface (cylindre à section carré, circulaire, elliptique...) ;
- le déroulement de la réparation peut être contrôlée à tout moment et peut être sécurisé par intégration d'un coupe-circuit dans l'élément chauffant, par exemple, par fusion d'un matériau de revêtement du fil ou encore par intégration d'un système de refroidissement au dispositif d'isolation, par exemple un dispositif de balayage gazeux ;
- l'utilisation d'un filet comme élément chauffant garantit un chauffage uniforme de la zone endommagé ;
- la mise en oeuvre du procédé de l'invention n'est pas limitée à des conduits en polyéthylène, mais peut être appliquée à tout type de conduits ou de volumes fermés (de type réservoirs) en matière thermofusible ;
- la réparation peut être effectuée sans selle de renfort ou d'autres éléments, technique de renforcement qui demeure actuellement délicate de mise en oeuvre et coûteuse.

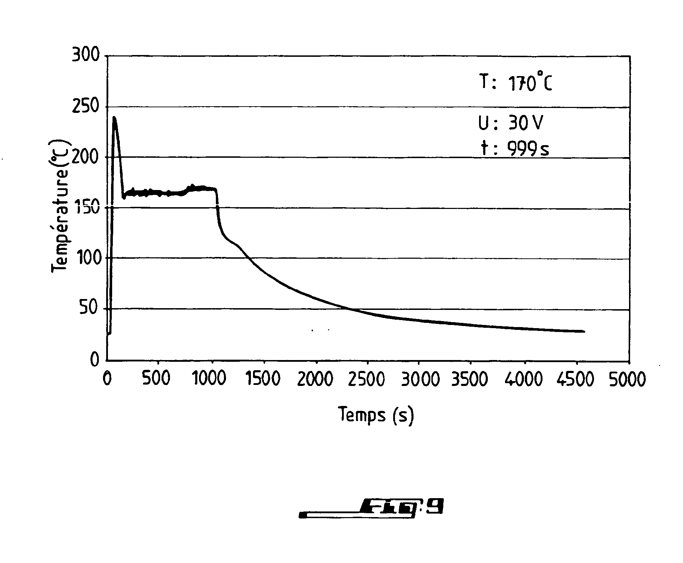

La figure 9 représente un exemple de cycle de chauffage-refroidissement destiné à la réparation d'un endommagement du type entaille extérieure, sur une profondeur de l'ordre de 10 % de l'épaisseur du tube, la réparation étant effectuée sur un tube en polyéthylène de diamètre 63 mm, épaisseur de paroi simple 5,8 mm. L'effet de ce cycle de chauffage est évalué par un essai en pression hydraulique à 80°C, avec une contrainte circonférentielle de 4 MPa, sur des tubes comportant des entailles calibrées, réalisées en laboratoire.

Le procédé de l'invention peut être utilisé, à titre préventif, notamment grâce à la grande variété de géométrie et de facture de mailles pouvant être réalisée industriellement, par exemple pour :
- élimination par chauffage modéré localisé des défauts internes d'une pièce en matière thermofusible,
- élimination par recuit des contraintes résiduelles d'une pièce en matière thermofusible,
- réticulation en masse localisée de matière thermofusible, et
- séchage / réticulation d'une colle à l'interface de deux pièces en matière thermofusible.

## Revendications

1. Procédé de réparation in situ d'un conduit (10) ou d'un réservoir réalisé uniquement en une matière thermofusible à l'intérieur duquel circule ou est stocké un fluide, avec une étape de mise en place d'un élément chauffant électrique (1) destiné à couvrir entièrement l'endommagement (A,B,C) à réparer, l'élément chauffant (1) comportant des conducteurs électriques (2,3) formant une résistance de chauffe, et avec une étape d'alimentation des conducteurs (2,3) avec une énergie électrique appropriée,
**caractérisé en ce que** l'alimentation des conducteurs électriques (2,3) est effectuée selon un tableau de régulation établi préalablement à la réparation et mettant en concordance, pour différentes matières thermofusibles et différents types d'endommagement du conduit (10) ou réservoir à réparer, au moins une caractéristique technique du conduit ou réservoir, une caractéristique de l'énergie électrique à appliquer et un profil de durée d'application de l'énergie électrique, l'alimentation des conducteurs électriques (2,3) étant régulée de manière à ce que, dans la zone à réparer, la température de la matière constituant la surface intérieure du conduit ou réservoir soit toujours inférieure au point de ramollissement de celle-ci.

2. Procédé selon la revendication 1, **caractérisé en ce que** la caractéristique technique du conduit ou réservoir selon laquelle l'application de l'énergie électrique est réglée, est l'épaisseur de paroi du conduit ou réservoir.

3. Procédé selon la revendication 1 ou 2, **caractérisé en ce que** le profil de durée d'application de l'énergie électrique comprend au moins une phase de chauffage de l'endommagement et au moins une phase de refroidissement de l'endommagement.

4. Procédé selon l'une quelconque des revendications 1 à 3, **caractérisé en ce que** l'énergie électrique est appliquée au conducteurs électriques avec une tension de consigne.

5. Procédé selon l'une quelconque des revendications 1 à 3, **caractérisé en ce que** l'énergie électrique est appliquée au conducteurs électriques avec une intensité de courant de consigne.

6. Procédé selon l'une quelconque des revendications 1 à 5, **caractérisé en ce que**, pour réparer un endommagement extérieur ou ne débouchant pas à la surface interne du conduit ou réservoir, la température de la matière de celui-ci peut atteindre, dans la zone à réparer, localement la température de fusion sur une profondeur allant jusqu'à 50% de l'épaisseur de la matière, la température de l'endommagement structural est seulement localement supérieure à la température de fusion de la matière thermofusible du conduit ou réservoir et que la température de la matière constituant la surface intérieure du conduit ou réservoir est toujours inférieure au point de ramollissement de celle-ci.

7. Procédé selon l'une quelconque des revendications 1 à 5, **caractérisé en ce que** la température de l'endommagement microstructural est localement à une température de recuit voisine du point de ramollissement de la matière thermofusible du conduit ou réservoir.

8. Procédé selon l'une quelconque des revendications 1 à 7, **caractérisé en ce que** l'élément chauffant est recouvert d'une couche isolante.

9. Procédé selon la revendication 8, **caractérisé en ce que** la couche isolante est une couche rapportée après fixation de l'élément chauffant.

10. Procédé selon l'une quelconque des revendications 3 à 9, **caractérisé en ce que** la phase de refroidissement comprend un refroidissement contrôlé du conduit ou réservoir à réparer.

11. Procédé selon l'une quelconque des revendications 1 à 10, **caractérisé en ce que** l'élément chauffant est recouvert d'un dispositif conducteur de chaleur destiné à éviter une incrustation de l'élément chauffant dans la matière du tronçon ou réservoir à réparer.

12. Procédé selon l'une quelconque des revendications 1 à 11, **caractérisé en ce que** le profil de durée d'application de l'énergie électrique est géré par un automate comportant un moyen d'introduction d'au moins un critère de régulation de l'énergie électrique à appliquer.

13. Procédé selon l'une quelconque des revendications 1 à 12, **caractérisé en ce que** le profil de durée d'application de l'énergie électrique est géré selon un système de gestion à minima d'au moins trois paramètres, à savoir la tension avec laquelle l'énergie électrique est appliquée, la durée d'application de cette énergie et la température de l'élément chauffant.

14. Procédé selon la revendication 13, **caractérisé en ce que** le système de gestion à minima inclut, en plus, un quatrième paramètre, à savoir la vitesse de refroidissement.

15. Dispositif pour réparer in situ un conduit (10) ou un réservoir réalisé uniquement en une matière thermofusible,
**caractérisé en ce qu'**il comprend un élément chauffant électrique (1) destiné à couvrir entièrement l'endommagement (A,B,C), l'élément chauffant (1) comportant des conducteurs électriques (2, 3) formant une résistance de chauffe sous la forme d'un filet ou d'une nappe, une source réglable (20) d'alimentation des conducteurs avec une énergie électrique appropriée, la source (20) comportant un programmateur, une mémoire interne, mémorisant un tableau de régulation établi préalablement à la réparation et mettant en concordance, pour différentes matières thermofusibles et différents types d'endommagement à réparer, au moins une caractéristique technique du conduit ou réservoir, une caractéristique de l'énergie électrique à appliquer et un profil de durée d'application de l'énergie électrique, et un moyen de réglage du courant appliquant aux conducteurs électriques (2, 3) de l'élément chauffant (1) l'énergie électrique avec une tension ou une intensité de courant de consigne telle que, dans la zone à réparer, la température de la matière constituant la surface intérieure du conduit ou réservoir soit toujours inférieure au point de ramollissement de celle-ci.

16. Dispositif selon la revendication 15, **caractérisé en ce qu'**il comprend un moyen permettant d'appliquer l'énergie électrique au conducteurs électriques avec une tension de consigne.

17. Dispositif selon la revendication 15, **caractérisé en ce qu'**il comprend un moyen permettant d'appliquer l'énergie électrique au conducteurs électriques avec une intensité de courant de consigne.

18. Dispositif selon l'une quelconque des revendications 15 à 17, **caractérisé en ce qu'**il comprend un moyen permettant de régler le refroidissement du conduit ou réservoir à réparer.

## Claims

1. In situ repair method for a conduit (10) or a reservoir made only of a thermofusible material, inside which a fluid circulates or is stored, with a stage for putting in place an electric heating element (1) intended to cover the damage (A, B, C) to be repaired completely, the heating element (1) comprising electrical conductors (2, 3) forming a heating resistance, and with a stage for supplying the conductors (2, 3) with suitable electric power,
**characterised in that** the supply of the electrical conductors (2, 3) is made according to a regulating panel set up before the repair and balancing at least one technical characteristic of the conduit or reservoir, a characteristic of the electric power to be applied and a profile for the duration of application of the electric power for different thermofusible materials and different types of damage to the conduit (10) or reservoir to be repaired, the supply of the electrical conductors (2, 3) being regulated so that the temperature of the material forming the internal surface of the conduit or reservoir is always less than its softening point in the area to be repaired.

2. Method according to claim 1, **characterised in that** the technical characteristic of the conduit or reservoir, according to which application of the electric power is regulated, is the thickness of the wall of the conduit or reservoir.

3. Method according to claim 1 or 2, **characterised in that** the profile for the duration of application of the electric power comprises at least one phase for heating the damage and at least one phase for cooling the damage.

4. Method according to any one of claims 1 to 3, **characterised in that** the electric power is applied to the electrical conductors with a reference voltage.

5. Method according to any one of claims 1 to 3, **characterised in that** the electric power is applied to the electrical conductors with a reference intensity of current.

6. Method according to any one of claims 1 to 5, **characterised in that**, to repair external damage or not coming out on the internal surface of the conduit or reservoir, the temperature of its material in the area to be repaired may reach the melting temperature locally over a depth of up to 50% of the thickness of the material, the temperature of the structural damage is only higher than the melting temperature of the thermofusible material of the conduit or reservoir locally and the temperature of the material forming the internal surface of the conduit or reservoir is always less than its softening point.

7. Method according to any one of claims 1 to 5, **characterised in that** the temperature of the microstructural damage is at an annealing temperature close to the softening point of the thermofusible material of the conduit or reservoir locally.

8. Method according to any one of claims 1 to 7, **characterised in that** the heating element is covered with an insulating layer.

9. Method according to claim 8, **characterised in that** the insulating layer is a layer applied after fixing the heating element.

10. Method according to any one of claims 3 to 9, **characterised in that** the cooling phase comprises controlled cooling of the conduit or reservoir to be repaired.

11. Method according to any one of claims 1 to 10, **characterised in that** the heating element is covered by a device for conducting heat intended to prevent incrustation of the heating element in the material of the section or reservoir to be repaired.

12. Method according to any one of claims 1 to 11, **characterised in that** the profile for the duration of application of the electric power is managed by an automatic device comprising a means of introducing at least one criterion for regulating the electric power to be applied.

13. Method according to any one of clams 1 to 12, **characterised in that** the profile for the duration of application of the electric power is managed according to a minimum management system with at least three parameters, that is the voltage at which the electric power is applied, the duration of application of this power and the temperature of the heating element.

14. Method according to claim 13, **characterised in that** the minimum management system also includes a fourth parameter, that is the cooling speed.

15. Device for in situ repair of a conduit (10) or a reservoir made only of a thermofusible material,
**characterised in that** it comprises an electric heating element (1) intended to cover the damage (A, B, C) completely, the heating element (1) comprising electrical conductors (2, 3) forming a heating resistance in the form of a net or cloth, a source (20), which can be regulated, for supplying the conductors with suitable electric power, the source (20) comprising a programmer, an internal memory, memorising a regulating panel set up before the repair and balancing at least one technical characteristic of the conduit or reservoir, a characteristic of the electric power to be applied and a profile for the duration of application of the electric power for different thermofusible materials and different types of damage to be repaired and a means for regulating the current applying the electric power to the electrical conductors (2, 3) of the heating element (1) with a reference voltage or intensity of current such that the temperature of the material forming the internal surface of the conduit or reservoir is always lower than its softening point in the area to be repaired.

16. Device according to claim 15, **characterised in that** it comprises a means allowing electric power to be applied to the electrical conductors with a reference voltage.

17. Device according to claim 15, **characterised in that** it comprises a means allowing electric power to be applied to the electrical conductors with a reference intensity of current.

18. Device according to any one of claims 15 to 17, **characterised in that** it comprises a means allowing the cooling of the conduit or reservoir to be repaired to be regulated.

## Patentansprüche

1. Verfahren zum In-Situ-Reparieren einer Leitung (10) bzw. eines Behälters, die bzw. der nur aus einem wärmeschmelzenden Material hergestellt ist und worin ein Medium fließt bzw. gespeichert wird, mit einem Schritt zum Einsetzen eines elektrischen Heizelements (1), das dazu bestimmt ist, die zu reparierende Schadstelle (A, B, C) vollständig zu überdecken, wobei das Heizelement (1) elektrische Leiter (2, 3) aufweist, die einen Heizwiderstand bilden, und mit einem Schritt zum Versorgen der Leiter (2, 3) mit einer geeigneten elektrischen Energie,
**dadurch gekennzeichnet, dass** die Versorgung der elektrischen Leiter (2, 3) gemäß einer vor der Reparatur erstellten Regelungstabelle erfolgt, bei der für verschiedene wärmeschmelzbare Materialien und verschiedene Schädigungsarten der zu reparierenden Leitung (10) bzw. des zu reparierenden Behälters zumindest ein technisches Merkmal der Leitung bzw. des Behälters, ein Merkmal der anzulegenden elektrischen Energie und ein Zeitdauerprofil der anzulegenden elektrischen Energie in Übereinstimmung gebracht wird, wobei die Versorgung der elektrischen Leiter (2, 3) so geregelt wird, dass in dem zu reparierenden Bereich die Temperatur des die Innenfläche der Leitung bzw. des Behälters bildenden Materials stets unter dem Erweichungspunkt desselben liegt.

2. Verfahren nach Anspruch 1, **dadurch gekennzeichnet, dass** das technische Merkmal der Leitung bzw. des Behälters, gemäß welchem die anzulegende elektrische Energie geregelt wird, die Wanddicke der Leitung bzw. des Behälters ist.

3. Verfahren nach Anspruch 1 oder 2, **dadurch gekennzeichnet, dass** das Zeitdauerprofil der anzulegenden elektrischen Energie zumindest eine Phase zum Erhitzen der Schadstelle und zumindest eine Phase zum Abkühlen der Schadstelle umfasst.

4. Verfahren nach einem der Ansprüche 1 bis 3, **dadurch gekennzeichnet, dass** die elektrische Energie mit einer Sollspannung an die elektrischen Leiter angelegt wird.

5. Verfahren nach einem der Ansprüche 1 bis 3, **dadurch gekennzeichnet, dass** die elektrische Energie mit einer Sollstromstärke an die elektrischen Leiter angelegt wird.

6. Verfahren nach einem der Ansprüche 1 bis 5, **dadurch gekennzeichnet, dass** zum Reparieren einer außenliegenden bzw. nicht zur Innenfläche der Leitung bzw. des Behälters mündenden Schadstelle die Temperatur des Materials derselben bzw. desselben in dem zu reparierenden Bereich bereichsweise die Schmelztemperatur über eine Tiefe bis zu 50 % der Materialdicke erreichen kann, dass die Temperatur der strukturellen Schadstelle nur bereichsweise über der Schmelztemperatur des wärmeschmelzbaren Materials der Leitung bzw. des Behälters liegt und dass die Temperatur des die Innenfläche der Leitung bzw. des Behälters bildenden Materials stets unter dem Erweichungspunkt desselben liegt.

7. Verfahren nach einem der Ansprüche 1 bis 5, **dadurch gekennzeichnet, dass** die Temperatur der mikrostrukturellen Schadstelle bereichsweise bei einer Nachhärtungstemperatur nahe dem Erweichungspunkt des wärmeschmelzbaren Materials der Leitung bzw. des Behälters liegt.

8. Verfahren nach einem der Ansprüche 1 bis 7, **dadurch gekennzeichnet, dass** das Heizelement mit einer Isolierschicht überdeckt ist.

9. Verfahren nach Anspruch 8, **dadurch gekennzeichnet, dass** die Isolierschicht eine nach Befestigung des Heizelements aufgebrachte Schicht ist.

10. Verfahren nach einem der Ansprüche 3 bis 9, **dadurch gekennzeichnet, dass** die Abkühlphase ein kontrolliertes Abkühlen der zu reparierenden Leitung bzw. des zu reparierenden Behälters umfasst.

11. Verfahren nach einem der Ansprüche 1 bis 10, **dadurch gekennzeichnet, dass** das Heizelement mit einer wärmeleitenden Vorrichtung überdeckt ist, die dazu bestimmt ist, eine Verkrustung des Heizelements in dem Material des zu reparierenden Abschnitts bzw. Behälters zu vermeiden.

12. Verfahren nach einem der Ansprüche 1 bis 11, **dadurch gekennzeichnet, dass** das Zeitdauerprofil der anzulegenden elektrischen Energie von einem Automaten erzeugt wird, der ein Mittel zum Eingeben zumindest eines Kriteriums zum Regeln der anzulegenden elektrischen Energie enthält.

13. Verfahren nach einem der Ansprüche 1 bis 12, **dadurch gekennzeichnet, dass** das Zeitdauerprofil der anzulegenden elektrischen Energie nach einem Minimalkontrollsystem von zumindest drei Parametern erzeugt wird, nämlich der Spannung, mit welcher die elektrische Energie angelegt wird, der Zeitdauer dieser angelegten Energie und der Temperatur des Heizelements.

14. Verfahren nach Anspruch 13, **dadurch gekennzeichnet, dass** das Minimalkontrollsystem ferner einen vierten Parameter umfasst, nämlich die Abkühlgeschwindigkeit.

15. Vorrichtung zum In-Situ-Reparieren einer Leitung (10) bzw. eines Behälters, die bzw. der nur aus einem wärmeschmelzenden Material hergestellt ist,
**dadurch gekennzeichnet, dass** sie ein elektrisches Heizelement (1) enthält, das dazu bestimmt ist, die Schadstelle (A, B, C) vollständig zu überdecken, wobei das Heizelement (1) elektrische Leiter (2, 3) aufweist, die einen Heizwiderstand in Form von einem Netz bzw. einer Lage bilden, sowie eine einstellbare Versorgungsquelle (20) zum Versorgen der Leiter mit einer geeigneten elektrischen Energie, wobei die Versorgungsquelle (20) ein Programmschaltwerk, einen internen Speicher, der eine vor der Reparatur erstellte Regelungstabelle speichert, bei der für verschiedene wärmeschmelzbare Materialien und verschiedene Arten der zu reparierenden Schadstelle zumindest ein technisches Merkmal der Leitung bzw. des Behälters, ein Merkmal der anzulegenden elektrischen Energie und ein Zeitdauerprofil der anzulegenden elektrischen Energie in Übereinstimmung gebracht werden, sowie ein Mittel zum Einstellen des Stroms, mit dem an die elektrischen Leiter (2, 3) des Heizelements (1) die elektrische Energie mit einer Sollspannung bzw. einer Sollstromstärke so angelegt wird, dass in dem zu reparierenden Bereich die Temperatur des die Innenfläche der Leitung bzw. des Behälters bildenden Materials stets unter dem Erweichungspunkt desselben liegt.

16. Vorrichtung nach Anspruch 15, **dadurch gekennzeichnet, dass** sie ein Mittel aufweist, mit dem die elektrische Energie mit einer Sollspannung an die elektrischen Leiter angelegt werden kann.

17. Vorrichtung nach Anspruch 15, **dadurch gekennzeichnet, dass** sie ein Mittel aufweist, mit dem die elektrische Energie mit einer Sollstromstärke an die elektrischen Leiter angelegt werden kann.

18. Vorrichtung nach einem der Ansprüche 15 bis 17, **dadurch gekennzeichnet, dass** sie ein Mittel aufweist, mit dem das Abkühlen der zu reparierenden Leitung bzw. des zu reparierenden Behälters eingestellt werden kann.
